# EUROPÄISCHE PATENTSCHRIFT

(11) **EP 0 947 115 B1**
(45) Veröffentlichungstag und Bekanntmachung des Hinweises auf die Patenterteilung: **28.02.2001**
(21) Anmeldenummer: 97949925.8
(22) Anmeldetag: 14.11.1997
(51) Int. Cl.: H04Q 7/32, H04Q 7/34

(54) **VERFAHREN ZUR ANPASSUNG VON REALISIERUNGSVERSIONS-SPEZIFISCHEN ABWEICHUNGEN VON KOMPONENTEN EINES KOMMUNIKATIONSNETZES**
PROCESS FOR MATCHING DIFFERENT VERSIONS OF THE COMPONENTS OF A COMMUNICATION NETWORK
PROCEDE POUR HARMONISER LES VARIANTES DES COMPOSANTS D'UN RESEAU DE COMMUNICATION SPECIFIQUES A DIFFERENTES VERSIONS DE REALISATION

(30) Priorität: 19.12.1996 DE 19653121
(43) Veröffentlichungstag der Anmeldung: 06.10.1999
(73) Patentinhaber: SIEMENS AKTIENGESELLSCHAFT, 80333 München (DE)
(72) Erfinder: SIBILA, Arnd, D-82272 Moorenweis (DE)
(86) Internationale Anmeldenummer: DE9702673
(87) Internationale Veröffentlichungsnummer: WO9827749

(56) Entgegenhaltungen:
- EP-A- 0 734 190
- GB-A- 2 294 844
- US-A- 5 412 375

## Beschreibung

In Kommunikationsnetzen bzw. in Zubringernetzen von Kommunikationsnetzen werden im Rahmen einer fortschrittlichen technischen Aktualisierung und Erweiterung Netzkomponenten eingesetzt, die unterschiedliche Realisierungsversionen aufweisen können. Bei den Netzkomponenten werden kommunikationsendgeräteseitige Abschluß-Einrichtungen und kommunikationsnetzseitige Komponenten des Komunikationsnetzes unterschieden. In RLL-Systemen (Radio in the Local Loop) mit einer gemäß dem DECT-Standard definierten Luftschnittstelle stellt beispielsweise eine RNT-Einheit (Radio Network Terminating), an die Kommunikationsendgeräte drahtgebunden anschließbar sind, eine kommunikationsendgeräteseitige Abschluß-Einrichtung dar. Weitere kommunikationsendgeräteseitige Einrichtungen sind in RLL-Systemen Basisstationen, die einerseits drahtlos mit den RNT-Einheiten und andererseits mit weiteren kommunikationsnetzseitigen Komponenten wie einer Funksteuereinrichtung - im weiteren mit Radio Distribution Unit bezeichnet - verbunden sind. Ein derartiges RLL-System ist in der EP 0734 190 A1 beschrieben.

Bei einer technischen Aktualisierung des Kommunikationsnetzes werden meist Realisierungsversionen von Komponenten des Kommunikationsnetzes eingesetzt, die sich von den Realisierungsversionen der bereits im Kommunikationsnetz implementierten Komponenten unterscheiden. Zwei Realisierungsversionen - beispielsweise Version 2 und Version 3 - unterscheiden sich beispielsweise dadurch, daß bei der Version 2 in der Luftschnittstelle eine Nutzung eines Übertragungskanals einschließlich des zugehörigen Protokolls und bei der Version 3 eine Doppel-Übertragungskanal-Nutzung über die Luftschnittstelle - beispielsweise gemäß dem DECT-Standard - vorgesehen ist. Beim Hinzufügen einer Komponente bzw. beim Ersetzen einer vorhandenen Komponente werden meist die Komponenten mit der neuesten Realisierungsversion bzw. Version eingesetzt. Dies bedeutet, daß beispielsweise bei einem Hinzufügen einer kommunikationsendgeräteseitigen Abschluß-Einrichtung mit einer aktuelleren Realisierungsversion aufgrund der vermittlungstechnischen Protokoll- und Übertragungskanalabweichungen diese mit der bereits vorhandenen Komponente des Kommunikationsnetzes - beispielsweise einer Radio Distribution Unit - nicht mehr zusammenarbeiten kann. In derartigen Fällen ist entweder die kommunikationsnetzseitige Komponente durch eine der Realisierungsversion der kommunikationsendgeräteseitige entsprechende Komponente zu ersetzen oder es können kommunikationsendgeräteseitig nur Komponenten eingesetzt werden, deren Realisierungsversion mit der netzseitigen Komponente übereinstimmt. Dies bedeutet jedoch, daß die Komponenten eines Kommunikationsnetzes, beispielsweise kommunikationsendgeräteseitige Abschluß-Einrichtungen und kommunikationsnetzseitige Komponenten, in unterschiedlichsten Realisierungsversionen zur Verfügung gestellt, d.h. produziert werden müssen.

Aus der US-A-5 412 375 ist ein Verfahren zur Auswahl einer Luftschnittstelle bekannt, bei dem Kommunikationsendgeräte über eine Luftschnittstelle an Basisstationen eines Kommunikationssystems angeschlossen sind. Mit Hilfe eines Informationsaustausches zwischen den jeweiligen Kommunikationsendgerät und der Basisstation wird aus den unterschiedlichen Luftschnittstellen - beispielsweise CDMA- oder TDMA-Luftschnittstelle - diejenige ausgewählt, die sowohl im Kommunikationsendgerät als auch in der Basisstation realisiert ist. Unterschiedliche Realisierungsversionen der Luftschnittstellen sind hierbei nicht berücksichtigt.

Die der Erfindung zugrundeliegende Aufgabe ist darin zu sehen, die Anzahl der zur Verfügung zu stellenden Realisierungsvarianten von Komponenten eines Kommunikationsnetzes zu verringern. Die Aufgabe wird durch die Merkmale des Patentanspruchs 1 gelöst.

Der wesentliche Aspekt des erfindungsgemäßen Verfahrens ist darin zu sehen, daß in den kommunikationsendgeräte- und kommunikationsnetzseitigen Komponenten zumindest eine deren jeweilige Realisierungsversion anzeigende Versionsidentifikation gespeichert ist, wobei zumindest teilweise die vermittlungstechnischen Protokoll- und Übertragungswege-Abweichungen der gespeicherten Realisierungsversionen - d.h. der aktuellen Realisierungsversion - vorhergehenden Realisierungsversionen in der jeweiligen kommunikationsendgerätseitigen oder kommunikationsnetzseitigen Komponenten realisiert sind. Dies bedeutet, daß beispielsweise eine Komponente des Kommunikationsnetzes mit der Realisierungsversion 3 auch mit Komponenten mit der Realisierungsversion 2 oder 1 zusammenarbeiten kann. Nach einem Aktivieren der kommunikationsendgerätseitigen Komponenten wird im Rahmen der Anmeldeprozedur die Versionsidentifikation an die jeweilige kommunikationsnetzseitige Komponente übermittelt. In dieser werden in Abhängigkeit von der übermittelten Versionsidentifikation die jeweiligen Protokoll- und Übertragungswege-Möglichkeiten der für eine Zusammenarbeit vorgesehenen Komponenten des Kommunikaitonsnetzes ermittelt und im Sinne einer protokoll- und übertragungswegekonformen Zusammenarbeit die kommunikationsendgerätseitigen und/oder kommunikationsnetzseitigen Komponenten eingestellt. Beispielsweise wird bei einer Übermittlung einer eine dritte Realisierungsversion anzeigende Versionsidentifikation von einer kommunikationsendgerätseitigen Komponente und einer eine zweite Realisierungsversion anzeigende Versionsidentifikation in der kommunikationsnetzseitigen Komponente in beiden Komponenten eine die übertragungswegekonforme und protokollkonforme Zusammenarbeit ermöglichende Realisierungsversion 2 eingestellt.

Vorteilhaft wird die Einstellung der jeweiligen Protokolle bzw. Übertragungswege in einem flüchtigen Speicher gespeichert - Anspruch 2. Durch Einsatz eines flüchtigen Speichers ist nach jeder Aktivierung der jeweiligen Komponente - beispeilsweise nach einem Versorgungsspannungsausfall - diese auf einen Ausgangszustand eingestellt, bei dem das erfindungsgemäße Verfahren eingeleitet wird; eine Unterscheidung von aktivierten vorhandenen oder hinzugefügten Komponenten hinsichtlich der Ausgangszustände und dem damit verbundenen Einleiten der erfindungsgemäßen Verfahren ist folglich nicht erforderlich.

Die Übermittlung der Versionsidentifikation wird vorteilhaft gemäß einem Protokoll bzw. Übertragungsweg durchgeführt, das eine Kommunikation zwischen den kommunikationsendgerätseitigen und den kommunikationsnetzseitigen Komponenten ermöglicht - Anspruch 3. In der Praxis wird dies ein Protokoll bzw. ein Übertragungsweg sein, die der niedrigsten noch im Kommunikationsnetz vorhandenen Realisierungsversion zugeordnet ist - beispielsweise sind in einem Kommunikationsnetz bei einer aktuellen Realisierungsversion 5 noch Komponenten mit einer Realisierungsversion 2 im Einsatz, so wird das Protokoll bzw. die Übertragungswege für die Übermittlung der Versionsidentifikation gemäß der zweiten Realisierungsversion gewählt. Hierzu wird eine vorgegebene Versionsidentifikation - beispielsweise eine die Realisierungsversion 2 anzeigende - nach einem Aktivieren einer kommunikationsendgerätseitigen Komponente im Rahmen der Anmeldeprozedur übermittelt - Anspruch 4.

Vorteilhaft wird die Einstellung der jeweiligen Realisierungsversion in den kommunikationsendgerätseitigen Komponenten durch Übermitteln zumindest einer betriebstechnischen Anweisung von der kommunikationsnetzseitigen Komponente an die kommunikationsendgerätseitigen Komponente bewirkt- Anspruch 5. Bei einer Übermittlung durch betriebstechnische Anweisungen bleiben die vorhandenen vermittlungstechnischen und teilweise standardisierten Vermittlungsprozeduren unbeeinflußt, d.h. können ohne Änderungen weiter benutzt werden.

Vorteilhaft wird mit der Versionsidentifikation eine den Typ der die Versionsidentifikation übermittelnde Komponente anzeigende Typeninformation übermittelt- Anspruch 6. Hierdurch ist eine eindeutige Zuordnung zu kommunikationsnetz - und kommunikationsendgeräteseitigen Komponenten (RNT,BS,RDU) mölich.

Das erfindungsgemäße Verfahren wird vorteilhaft in einem RLL-System (Radio in the Local Loop) eingesetzt, wobei kommunikationsendgeräteseitige Komponenten mit Kommunikationsendgeräten verbindbare Abschluß-Einrichtungen sowie mit diesen drahtlos verbundene Basisstationen und kommunikationsnetzseitige Komponenten Funksteuereinrichtungen - Radio Distribution Units - repräsentieren - Anspruch 7.

Weitere vorteilhafte Ausgestaltungen des erfindungsgemäßen Verfahren sind den weiteren Ansprüchen zu entnehmen.

Im folgenden wird das erfindungsgemäße Verfahren anhand eines ein Ablaufdiagramm umfassendes Blockschaltbild näher erläutert.

Im oberen Bereich des Blockschaltbildes ist eine Netzabschlußeinrichtung RNT und eine Basisstation BS dargestellt, die drahtlos miteinander verbunden sind. Die Luftschnittstelle ist beispielsweise gemäß dem DECT-Standard realisiert. An die Netzabschluß-Einrichtung RNT ist über eine Anschlußleitung ASL ein Kommunikationsendgerät KE anschließbar. Die Netzabschluß-Einrichtung RNT und die Basisstation BS stellen kommunikationsendgerätseitige Netzabschluß-Einrichtungen RNT, BS dar, da die beiden Einrichtungen RNT, BS den Abschluß eines größeren Kommunikationsnetzes KN repräsentieren. Die Basisstation BS ist mit einer Funksteuereinrichtung RDU - im weiteren als Radio Distribution Unit RDU bezeichnet - verbunden, die eine kommunikationsnetzseitige Komponente RDU des Kommunikationsnetzes KN repräsentiert. Die Radio Distribution Unit RDU ist mit weiteren Komponenten - durch strichlierte Linien angedeutet - des Kommunikationsnetzes KN verbunden. Der Netzabschluß-Einrichtung RNT und der Radio Distribution Unit RDU ist jeweils eine senkrechte, strichpunktierte Linie zugeordnet, die jeweils Zeitachsen t des im folgenden erläuterten Ablaufdiagramms darstellen.

Für das Ausführungsbeispiel sei angenommen, daß die Netzabschluß-Einrichtung RNT gemäß einer dritten Realisierungsvariante V3 und die Radio Distribution Unit RDU gemäß einer zweiten Realisierungsvariante V2 ausgestaltet ist. Beispielsweise unterscheiden sich beiden Realisierungsvarianten V2,3 dadurch, daß bei der zweiten Realisierungsvariante V2 über die DECT-Luftschnittstelle eine Ein-Übertragungskanal-Belegung (Single Slot) einschließlich einer zugehörigen Protokollvariante und in der dritten Realisierungsversion V3 eine Doppel-Übertragungskanal-Belegung (Double Slot) einschließlich einer zugehörigen erweiterten Protokollvariante vorgesehen ist. Diese unterschiedlichen Realisierungsvarianten V2,3 von Komponenten eines Kommunikationsnetzes sind beispielsweise bei einer Erneuerung der Netzabschluß-Einrichtung RNT oder bei einer Erweiterung durch eine Netzabschluß-Einrichtung RNT möglich.

Erfindungsgemäß ist in der Netzabschluß-Einrichtung RNT eine die dritte Realisierungsversion V3 anzeigende Versionsidentifikation vi3 gespeichert. Die Speicherung dieser Versionsidentifikation vi3 kann beispielsweise bei der Herstellung der Netzabschluß-Einrichtung RNT in einem nichtflüchtigen Speicher - nicht dargestellt - erfolgen.

Erfindungsgemäß wird nach einem Aktivieren, d.h. nach einem Einschalten der Netzabschluß-Einrichtung RNT eine Access Rights Request-Meldung ARREQ von dieser über die Basisstation BS an die Radio Distribution Unit RDU übermittelt. Durch diese Access Rights Request-Meldung ARREQ wird eine gemäß dem DECT-Standard standardisierte Zugriffsrechteprozedur ZRP eingeleitet, bei der eine Key-Allocate-Meldung KALL, eine Authentication-Request-Meldung AREQ(FP), eine Authentication-Replay-Meldung AREP(FP), eine weitere Authentication-Request-Meldung AREQ(PP), eine weitere Authentication-Replay-Meldung AREP(PP) und eine die Zugriffsrechte-Prozedur ZRP abschließende Acess-Rights-Accept-Meldung ARACC hinsichtlich der Übertragungsrichtung gemäß dem Ablaufdiagramm des Blockschaltbildes übermittelt werden. Mit Hilfe dieser angegebenen Meldungen werden die Übertragungsschlüssel über die DECT-Luftschnittstelle sowie die Authentisierungen sowohl der Netzabschluß-Einrichtung RNT als auch der Basisstation BS bzw. Radio Distribution Unit RDU durchgeführt. Die erfindungsgemäße dritte Versionsinformation vi3 wird zusammen mit einer Typeninformation ti bereits in der ersten übermittelten Meldung, d.h. Meldung ARREQ, von der Netzabschluß-Einrichtung RNT zur Radio Distribution Unit RDU übermittelt bzw. übertragen, wobei die dritte Versionsidentifikation vi3 die dritte Realisierungsversion V3 und die Typeninformation ti den Typ der Netzabschluß-Einrichtung RNT anzeigt.

Nach dem Meldungsaustausch gemäß der Zugriffsrechteprozedur ZRP wird von der Netzabschluß-Einrichtung RNT durch Übermitteln einer Locate-Request-Meldung LREQ eine Location Registration Prozedur LRP eingeleitet, mit deren Hilfe Informationen zur Erreichbarkeit der Netzabschlußeinrichtung RNT sowie die aktuellen Identifikationen - beispielsweise TPUI - der jeweiligen Einrichtungen übermittelt werden. Die vorhergehend erläuterten Meldungen werden hinsichtlich der Protokolle und der Übertragungswege beispielsweise gemäß der zweiten Realisierungsversion V2 übermittelt, da diese die Realisierungsversion V2 darstellt, bei der die kommunikationsnetz- und kommunikationsendgerätseitigen Komponenten RNT, BS, RDU des Kommunikationsnetzes protokoll- und übertragungswegekonform kommunizieren können - beim Ausführungsbeispiel mit einer Ein-Übertragungskanal-Belegung einschließlich des zugehörigen Protokolls.

In der Radio Distribution Unit RDU wird durch Vergleich ihrer mit der übermittelten Versionsidentifikation vi2,3 überprüft, bei welcher aktuellsten Realisierungsversion V2,3 - d.h. bei welcher der höchstwertigen Realisierungsversionen V2,3 eine protokoll- und übertragungswege-konforme Zusammenarbeit der kommunikationsendgerätseitigen Netzabschluß-Einrichtung RNT und der kommunikationsnetzseitigen Radio Distribution Unit RDU möglich ist. Da die Radio Distribution Unit RDU eine zweite Realisierungsversion V2 aufweist, kann sie nur gemäß dieser Realisierungsversion V2 mit der Netzabschluß- Einrichtung RNT kommunzieren. Da sie bereits gemäß dieser zweiten Realisierungsversion V2 mit der Netzabschluß-Einrichtung RNT kommuniziert, ist eine spezielle Mitteilung an die Netzabschluß-Einrichtung RNT über einen Betriebseinstellung gemäß der dritten Realisierungsvariante V3 nicht erforderlich.

Liegt beispielsweise eine Radio Distribution Unit RDU mit einer Realisierungsvariante V3 vor, so wird nach dem Durchführen der Zugriffsrechte-Prozedur ZRP und der Location Registration Prozedur LRP nach einer Subscription-Complete-Meldung SC an weitere Komponenten des Kommunikationsnetzes KN eine betriebstechnische Anweisung amo in der Radio Distribution Unit RDU gebildet und an die Netzabschluß-Einrichtung RNT übermittelt, wobei in der betriebstechnischen Anweisung amo eine die dritte Realisierungsversion V3 anzeigende dritte Versionsidentifikation VI3 eingefügt ist - im Blockschaltbild durch eine strichlierte Linie angedeutet. Nach Empfang einer betriebstechnischen Anweisung amo in der Netzabschluß- Einrichtung RNT wird in dieser der Betrieb hinsichtlich der Protokolle und der Übertragungswege gemäß der dritten Realisierungsversion V3 eingestellt. Ab diesem Zeitpunkt kommunizieren die Netzabschluß-Einrichtung RNT und die Radio Distribution Unit RDU gemäß Protokollen und Übertragungswegen, die der dritten Realisierungsvarinante V3 zugeordnet sind.

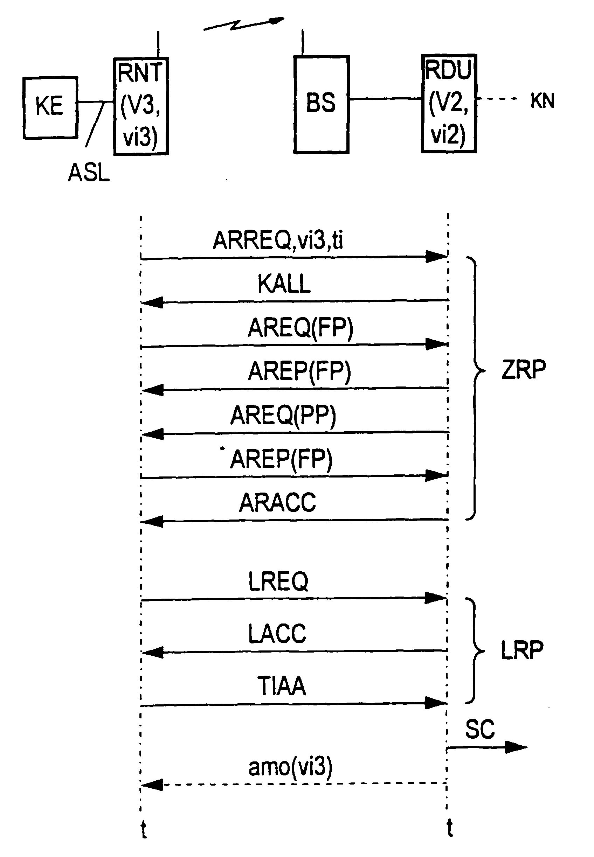

## Patentansprüche

1. Verfahren zur Anpassung von realisierungsversionen-spezifischen vermittlungstechnischen Protokoll- und Übertragungswege-Abweichungen von kommunikationsendgeräteseitigen und kommunikationsnetzseitigen Komponenten (RNT,BS,RDU) in einem Komunikationsnetz (KN),
**dadurch gekennzeichnet,**
- daß in den kommunikationsendgeräte- und kommunikationsnetzseitigen Komponenten (RNT,BS,RDU) zumindest eine deren jeweilige Realisierungsversion (V2,3) anzeigende Versionsidentifikation (vi2,3) gespeichert ist, wobei zumindest teilweise die vermittlungstechnischen Protoll- und Übertragungswege-Abweichungen der der gespeicherten Realisierungsversion (V2,3) vorhergehenden Realisierungsversionen (V2,3) in der jeweiligen Komponente (RNT,BS,RDU) realisiert sind,
- daß bei einem Aktivieren der kommunikationsendgeräteseitigen Komponenten (RNT, BS) im Rahmen der Anmeldeprozedur die Versionsidentifikation (vi2,3) an die jeweilige kommunikationsnetzseitige Komponente (RDU) übermittelt wird und
- daß in Abhängigkeit von der übermittelten und der gespeicherten Versionsindentifikation (vi2,3) die jeweiligen Protokoll- und Übertragungswege-Möglichkeiten der kommunikationsnetzseitigen Komponente (RDU) und der betreffenden kommunikationsendgeräteseitigen Komponente (RNT,BS) ermittelt und im Sinne einer protokoll- und übertragungswegekonformen Zusammenarbeit die kommunikationsendgeräteseitigen Komponente (RNT,BS) und/oder kommunikationsnetzseitige Komponenten (RDU) eingestellt werden.

2. Verfahren nach Anspruch 1,
**dadurch gekennzeichnet,**
daß die Einstellung der jeweiligen Protokolle bzw. Übertragungswege in einem flüchtigen Speicher gespeichert wird.

3. Verfahren nach Anspruch 1 oder 2,
**dadurch gekennzeichnet,**
daß nach dem Aktivieren einer kommunikationsendgeräteseitigen Komponente (RNT, BS) vor einer Einstellung der vermittlungstechnischen Protokolle und Übertragungswege eine Kommunikation zwischen dieser und der betroffenen kommunikationsnetzseitigen Komponente (RDU) gemäß einem mit einer vorgegebenen Versionsidentifikation (vi2) bestimmten vermittlungstechnischen Protokoll bzw. Übertragungsweg durchgeführt wird, mit dem eine Kommunikation zwischen Komponenten (RNT,BS,RDU) mit unterschiedlichen Realisierungsversionen (V2,3) möglich ist.

4. Verfahren nach Anspruch 3,
**dadurch gekennzeichnet,**
daß die vorgegebene Versionsidentifikation (vi2,3) nach einem Aktivieren einer kommunikationsendgeräteseitigen Komponente (RNT, BS) im Rahmen der Anmeldeprozedur übermittelt wird.

5. Verfahren nach einem der vorhergehenden Ansprüche,
**dadurch gekennzeichnet,**
daß die Einstellung der jeweiligen Realisierungsversion (V2,3) in den kommunikationsendgeräteseitigen Komponenten (RNT, BS) durch Übermitteln zumindest einer betriebstechnischen Anweisung (amo) von der kommunikationsnetzseitigen Komponente (RDU) an die kommunikationsendgeräteseitigen Komponente (RNT,BS) bewirkt wird.

6. Verfahren nach einem der vorhergehenden Ansprüche,
**dadurch gekennzeichnet,**
daß mit der Versionsidentifikation (vi2,3) eine den Typ der die Versionsidentifikation (vi2,3) übermittelnde Komponente (RNT,BS,RDU) anzeigende Typeninformation (ti) übermittelt wird.

7. Verfahren nach einem der vorhergehenden Ansprüche,
**dadurch gekennzeichnet,**
daß das Kommunikationsnetz (KN) durch ein RLL-System realisiert ist, in dem kommunikationsendgeräteseitige Komponenten repräsentierende Basisstationen (BS) drahtlos mit Netzabschluß-Einheiten (RNT) zum drahtgebundenen Anschluß von Kommunikationsendgeräten (KE) verbunden sind, wobei die Basisstationen (BS) mit zumindest einer eine kommunikationsnetzseitige Komponenten repräsentierende Funksteuereinrichtung (RDU) verbunden sind, und daß von den kommunkationsendgeräteseitigen Netzabschlußeinheiten (RNT) bzw. Basisstationen (BS) an die kommunikationsnetzseitigen Funksteuereinheiten (RDU) Versionsidentifikationen (vi2,3) und optional Typeninformationen (ti) übermittelt werden.

8. Verfahren nach einem der vorhergehenden Ansprüche,
**dadurch gekennzeichnet,**
daß die vermittlungstechnischen Protokolle zur Verbindungssteuerung sowie zur Steuerung von Leistungsmerkmalen vorgesehen sind und die Übertragungswege durch Übertragungskanäle der drahtlosen Verbindungen repräsentiert sind.

## Claims

1. Method for adapting implementation version-specific switching protocol and transmission path deviations of communication terminal and communication network components (RNT, BS, RDU) in a communication network (KN),
characterized in that
- in the communication terminal and communication network components (RNT, BS, RDU) at least one version identification (vi2, 3) indicating their respective implementation version (V2, 3) is stored, the switching protocol and transmission path deviations of the implementation versions (V2, 3) preceding the stored implementation version (V2, 3) being implemented at least partially in the respective component (RNT, BS, RDU),
- with an activation of the communication terminal components (RNT, BS) during the registration procedure, the version identification (vi2, 3) is transmitted to the respective communication network component (RDU), and
- depending on the transmitted version identification and the stored version identification (vi2, 3), the respective protocol and transmission path capabilities of the communication network component (RDU) and of the relevant communication terminal component (RNT, BS) are determined and the communication terminal components (RNT, BS) and/or communication network component (RDU) are/is adjusted in the sense of protocol- and transmission-path-conformal interworking.

2. Method according to Claim 1,characterized in that the adjustment of the respective protocols and transmission paths is stored in a volatile memory.

3. Method according to Claim 1 or 2, characterized in that after the activation of a communication terminal component (RNT, BS), before the switching protocols and transmission paths are adjusted, a communication is carried out between this component and the affected communication network component (RDU) in accordance with a switching protocol and, respectively, transmission path determined by means of a predetermined version identification (vi2), by means of which a communication between components (RNT, BS, RDU) is possible with different implementation versions (V2, 3).

4. Method according to Claim 3,
characterized in that the predetermined version identification (vi2, 3) is transmitted during the registration procedure after an activation of a communication terminal component (RNT, BS).

5. Method according to one of the preceding claims, characterized in that the adjustment of the respective implementation version (V2, 3) in the communication terminal components (RNT, BS) is effected by transmitting at least one operating instruction (amo) from the communication network component (RDU) to the communication terminal component (RNT, BS).

6. Method according to one of the preceding claims, characterized in that, together with the version identification (vi2, 3), a type information (ti) indicating the type of the component (RNT, BS, RDU) transmitting the version identification (vi2, 3) is transmitted.

7. Method according to one of the preceding claims, characterized in that the communication network (KN) is implemented by an RLL system in which the base stations (BS) representing communication terminal components are wirelessly connected to network terminating units (RNT) for the wire connection of communication terminals (KE), the base stations (BS) being connected to at least one radio distribution unit (RDU) representing a communication network component, and in that version identification items (vi2, 3) and optionally type information items (ti) are transmitted by the communication terminal network terminating units (RNT) or, respectively, base stations (BS) to the communication network radio distribution units (RDU).

8. Method according to one of the preceding claims, characterized in that the switching protocols are provided for connection control and for controlling performance features and the transmission paths are represented by transmission channels of the wireless connections.

## Revendications

1. Procédé pour harmoniser des variantes, spécifiques à différentes versions de réalisation des protocoles de commutation et des voies de transmission, de composantes côté terminaux de communication et côté réseau de communication (RNT, BS, RDU) dans un réseau de communication (KN)
**caractérisé par le fait**
- que, dans les composantes côté terminaux de communication et côté réseau de communication (RNT, BS, RDU), est mémorisée au moins une identification de version (vi2, 3) qui indique leur version de réalisation respective (V2, 3), les variantes des protocoles de commutation et des voies de transmission des versions de réalisations précédentes (V2, 3) à la version de réalisation mémorisée (V2, 3) étant, au moins partiellement, réalisées dans la composante respective (RNT, BS, RDU),
- que, lors de l'activation des composantes côté terminaux (RNT, BS), l'identification de version (vi2, 3) est transmise à la composante côté réseau respective (RDU) dans le cadre de la procédure de demande de connexion et
- que, en fonction de l'identification de version transmise et de l'identification de version mémorisée (vi2, 3), on détermine les possibilités respectives de protocole et des voies de transmission de la composante côté réseau (RDU) et de la composante côté terminaux concernée (RNT, BS) et on règle, dans le sens d'une exploitation commune en conformité de protocole et de voies de transmission, la composante côté terminaux (RNT, BS) et/ou la composante côté réseau (RDU).

2. Procédé conforme à la revendication 1
**caractérisé par le fait**
que le réglage des protocoles et/ou des voies de transmission respectifs est mémorisé dans une mémoire volatile.

3. Procédé selon la revendication 1 ou 2
**caractérisé par le fait**
que, après l'activation d'une composante côté terminaux (RNT, BS) et avant le réglage des protocoles de commutation et des voies de transmission, une communication est effectuée, entre cette composante et la composante côté réseau concernée (RDU), conformément à un protocole de commutation et/ou une voie de transmission, définis par une identification de version prédéterminée (vi2), qui permettent une communication entre composantes (RNT, BS, RDU) avec des versions de réalisation différentes (V2, 3).

4. Procédé selon la revendication 3
**caractérisé par le fait**
que l'identification de version prédéterminée (vi2, 3) est transmise, dans le cadre de la procédure de demande de connexion, après une activation d'un composante côté terminaux (RNT, BS).

5. Procédé selon l'une des revendications précédentes
**caractérisé par le fait**
que le réglage de la version respective de réalisation (V2, 3) dans les composantes côté terminaux (RNT, BS) est provoquée par la transmission d'au moins une instruction de service (amo) envoyée par la composante côté réseau (RDU) à la composante côté terminaux (RNT, BS).

6. Procédé selon l'une des revendications précédentes
**caractérisé par le fait**
que, avec l'identification de version (vi2, 3), une information (ti) indiquant le type de la composante (RNT, BS, RDU) qui transmet l'identification de version (vi2, 3), est transmise.

7. Procédé selon l'une des revendications précédentes
**caractérisé par le fait**
que le réseau de communication (KN) est réalisé par un système RLL, dans lequel des stations de base (BS), représentant des composantes côté terminaux, sont reliées par radio à des unités de terminaison du réseau (RNT) pour le raccordement fixe de terminaux de communication (KE), les stations de base (BS) étant reliées à au moins un dispositif de commande par radio (RDU), représentant une composante côté réseau, et que des identifications de version (vi2, 3) et, le cas échéant, des informations de type (ti) sont transmises par les unités de terminaison du réseau côté terminaux (RNT) et/ou les stations de base (BS) aux unités de commande par radio côté réseau (RDU).

8. Procédé selon l'une des revendications précédentes
**caractérisé par le fait**
que les protocoles de commutation sont prévus pour la commande de la liaison et pour la commande de caractéristiques d'exploitation et les voies de transmission sont représentées par des canaux de transmission des liaisons radio.
